## Europäisches Patentamt

## European Patent Office

## Office européen des brevets

(19)

(11) Veröffentlichungsnummer: **0 214 457 B1**

(12) **EUROPÄISCHE PATENTSCHRIFT**

(45) Veröffentlichungstag der Patentschrift: **21.11.91**

(51) Int. Cl.⁵: **B60N 3/18**

(21) Anmeldenummer: **86110696.1**

(22) Anmeldetag: **02.08.86**

(54) **Vorrichtung zum Abstellen von Getränkebehältern in Fahrzeugen.**

(30) Priorität: **13.08.85 DE 8523246 U**
**24.12.85 DE 3546034**

(43) Veröffentlichungstag der Anmeldung:
**18.03.87 Patentblatt 87/12**

(45) Bekanntmachung des Hinweises auf die
Patenterteilung:
**21.11.91 Patentblatt 91/47**

(84) Benannte Vertragsstaaten:
**AT BE CH DE FR GB IT LI NL SE**

(56) Entgegenhaltungen:
**DE-B- 271 234**     **FR-A- 611 197**
**FR-A- 758 207**     **FR-A- 978 832**
**US-A- 1 623 427**   **US-A- 2 926 879**
**US-A- 4 437 636**

(73) Patentinhaber: **Saalfeld, Hergen**
**Scheunebergstrasse 23**
**W-2870 Delmenhorst(DE)**

(72) Erfinder: **Saalfeld, Hergen**
**Scheunebergstrasse 23**
**W-2870 Delmenhorst(DE)**

(74) Vertreter: **Jabbusch, Wolfgang, Dr.**
**Elisabethstrasse 6**
**W-2900 Oldenburg(DE)**

## Beschreibung

Die Erfindung betrifft eine Vorrichtung zum Abstellen von Getränkebehältern, insbesondere von offenen Trinkgefäßen, in Fahrzeugen, mit einem in dem Fahrzeug anordbaren Ständer, an dem eine Behälteraufnahme pendelfähig gelagert ist.

Nach der US-A- 2 926 879 ist eine Halterung der vorbezeichneten Gattung bekannt. Die pendelfähige Behälteraufnahme ist als oben offener, an dem Ständer hängender Korb ausgebildet, in den ein Trinkglas einsetzbar ist. Die Halterung verhindert ein Umkippen des Getränkebehälters, so daß ein Insasse des Fahrzeuges seinen Getränkebehälter auch während der Fahrt des Fahrzeuges in die Behälteraufnahme setzen kann und den Getränkebehälter nur zum Trinken entnehmen muß. Der Insasse hat so die meiste Zeit seine Hände frei, weil er seinen Getränkebehälter nicht ständig festhalten muß.

Die pendelfähige Abhängung der Behälteraufnahme hat zwar den Vorteil, daß der flüssige Inhalt des Getränkebehälters, insbesondere bei ruckartigen Bewegungen des Fahrzeuges, aus dem offenen Getränkebehälter kaum herausschwappen kann. Jedoch erfordert das Absetzen eines gefüllten Getränkebehälters in der frei schwingenden und pendelnden Behälteraufnahme eine konzentriert vorzunehmende Einfädelung des Getränkebehälters in die oben offene Seite der Behälteraufnahme. Da dazu beispielsweise dem Fahrer eines Fahrzeuges während der Fahrt nur eine Hand zur Verfügung steht, ist das Absetzen des Getränkebehälters nicht nur unbequem, sondern kann auch den Fahrer eines Fahrzeuges in gefährlicher Weise ablenken. Außerdem können in die Behälteraufnahme der bekannten Vorrichtung nur solche Trinkgefäße eingesetzt werden, deren Maße den Abmessungen der Behälteraufnahme, beispielsweise dem Durchmesser und der Bauhöhe entsprechen.

Der Erfindung liegt die Aufgabe zugrunde, eine Vorrichtung der eingangs genannten Gattung zu schaffen, die ein Herausschwappen einer Flüssigkeit aus einem Getränkebehälter bei Fahrzeugbewegungen und ein Umkippen des Getränkebehälters verhindert, und die in einfacher Weise, vorzugsweise auch einhändig, gehandhabt werden kann.

Die Aufgabe ist erfindungsgemäß dadurch gelöst worden, daß der Ständer eine die Behälteraufnahme bei ihren Pendelbewegungen führende Führung aufweist, die eine an der Oberseite des Ständers angeordnete Vertiefung umfaßt, in die die Behälteraufnahme formschlüssig eingesetzt ist, daS der Ständer eine ebene Standfläche aufweist, mit der er auf einer Stellfläche einer im Fahrzeug anordbaren Halterung in waagerechter Ebene schwingfähig aufgestellt ist, daß an der Standfläche ein Zapfen angeordnet ist, der lotrecht nach unten durch eine Durchbrechung der Stellfläche in die Halterung hinein vorsteht und daß zwischen dem Zapfen und den Seitenwänden der Halterung in waagerechter Ebene Federelemente verspannt sind.

Die Behälteraufnahme, auf der der Getränkebehälter abgestellt werden kann, ist derart relativ zum Ständer beweglich angeordnet, daß sie Lageänderungen des Fahrzeuges nicht mitmacht. Bei beschleunigten Bewegungen des Fahrzeuges, zum Beispiel bei Geschwindigkeitserhöhungen oder Kurvenfahrten, wirken im wesentlichen horizontale Kräfte auf den in dem Fahrzeug angeordneten Ständer der Vorrichtung. Da die Behälteraufnahme und der Ständer der Vorrichtung nur relativ schwach miteinander gekoppelt sind, werden diese Kräfte nicht voll auf die Behälteraufnahme übertragen, so daß die Behälteraufnahme aufgrund ihrer Massenträgheit versucht, in ihrem Bewegungszustand zu verharren und sich nur allmählich an den geänderten Bewegungszustand des Fahrzeuges anpaßt. Es werden keine Bewegungen ruckartig auf den abgestellten Getränkebehälter übertragen, so daß er bei Bewegungsänderungen des Fahrzeuges weder umkippt noch Flüssigkeit aus ihm herausschwappt. Durch die Führung des Ständers wird die Behälteraufnahme so zwangsgeführt, daß sie durch ihre Relativbewegung gegenüber dem Ständer die auf den Getränkebehälter wirkenden Kräfte, die zum Umkippen oder Überschwappen des Getränkebehälters führen könnten, auffängt und diesen Kräften durch eine Mitnahme des Getränkebehälters bei ihrer Pendelbewegung entgegenwirkt.

Der Getränkebehälter kann in einfacher Weise, insbesondere auch einhändig, auf der Behälteraufnahme abgestellt werden. Der Ständer kann beispielsweise auf eine Konsole eines Autos und auf einem Tisch in einem Zug oder Schiff abgestellt werden, er kann aber zum Beispiel auch an einer Wand angeordnet werden.

Da die Führung des Ständers eine Vertiefung ist, wird die Behälteraufnahme bei ihrer Pendelbewegung in der Vertiefung von der Wandung der Vertiefung so geführt, daß sie relativ zum Ständer gekippt wird, und zwar in einer Richtung zum Ständer, die der Kipprichtung der auf den Getränkebehälter bei Bewegungsänderungen des Fahrzeuges wirkenden Trägheitskräfte entgegenwirkt, so daß der Getränkebehälter im Endeffekt auf der Behälteraufnahme stehenbleibt. Ebenso wird den auf die in dem Getränkebehälter befindlichen Flüssigkeit wirkenden Trägheitskräften entgegengewirkt, so daß keine Flüssigkeit aus dem Getränkebehälter herausschwappt.

Bei der erfindungsgemäsen Vorrichtung ist nicht nur die Behälteraufnahme schwingfähig gelagert, sondern die Vorrichtung weist zusätzlich eine im Fahrzeug anordbare Halterung auf, an der der Ständer in waagerechter Ebene schwingfähig angeordnet ist, so daß insbesondere kurzzeitige, ruckartige Bewegungsänderungen des Fahrzeuges schon durch Schwingungen des Ständers kompensiert werden.

Der Ständer weist eine ebene Standfläche auf, mit der er auf einer Stellfläche der Halterung aufgestellt ist. An der Standfläche ist ein Zapfen angeordnet, der lotrecht nach unten durch eine Durchbrechung der Stellfläche in die Halterung hinein vorsteht und zwischen dem Zapfen und den Seitenwänden der Halterung sind in waagerechter Ebene Federelemente verspannt. Durch die beispielsweise kreuzförmig verspannten Federelemente, die zum Beispiel Spiralfedern, Gummizüge oder ähnliches sein können, kann der Ständer in waagerechter Ebene Schwingungen ausführen.

Nach einer Weiterbildung zeichnet sich die Vorrichtung dadurch aus, daß die Vertiefung eine Kugelschale ist, daß die Behälteraufnahme und der Ständer kugelgelenkartig ineinandergreifen, daß die Behälteraufnahme an ihrer der Kugelschale abgewandten Seite einen Abstellplatz für den Getränkehalter aufweist und daß der Krümmungsmittelpunkt der Kugelschale oberhalb der Behälteraufnahme liegt. Bei ihrer Pendelbewegung wird die Behälteraufnahme um den Krümmungsmittelpunkt geschwenkt, wobei sie von der Kugelschale geführt wird. Vorzugsweise ist der Krümmungsradius der Kugelschale so groß gewählt, daß der Krümmungsmittelpunkt der Kugelschale sich so weit oberhalb der Behälteraufnahme befindet, wie etwa der Flüssigkeitsspiegel einer Flüssigkeit in einem auf der Behälteraufnahme abgestellten Getränkebehälter. Liegt der Krümmungsmittelpunkt der Kugelschale, der gleichzeitig der Bewegungsmittelpunkt der Behälteraufnahme ist, etwa in dieser Höhe, so wird ein Ausschwappen von Flüssigkeit aus dem Getränkebehälter sicher vermieden. Durch die Ausbildung des Abstellplatzes der Behälteraufnahme läßt sich, beispielsweise durch eine kreisförmige Vertiefung, festlegen, welchen Durchmesser der auf der Behälteraufnahme abgestellte Getränkebehälter höchstens aufweisen kann. Bei üblichen Getränkebehältern korreliert die Höhe des Getränkebehälters in der Regel mit dem Durchmesser seiner Standfläche, so daß sich beim Fertigen der erfindungsgemäßen Vorrichtung in etwa ein Zusammenhang zwischen dem Durchmesser der Abstellfläche der Behälteraufnahme und dem Krümmungsradius der Kugelschale festlegen läßt.

Um eine möglichst reibungswiderstandsarme Führung der Behälteraufnahme zu ermöglichen, sind zwischen der Behälteraufnahme und der Wandung der Vertiefung Rollelemente angeordnet.

Die Behälteraufnahme weist in ihrem unteren Bereich vorzugsweise ein Gewicht auf, durch das die Behälteraufnahme eine asymmetrischere Massenverteilung bekommt und der Schwerpunkt der Behälteraufnahme möglichst weit nach unten verlagert wird, so daß sich die Behälteraufnahme rollpendelartig in der Vertiefung bewegen kann. Vorzugsweise weist die Wandung der Vertiefung in ihrem unteren Bereich eine Durchbrechung auf, durch die das Gewicht nach unten, etwa perpendikelartig, in den Ständer hineinragt. Das Gewicht kann aber auch ein in dem in der Vertiefung gelagerten unteren Bereich der Behälteraufnahme angeordneter Zusatz aus Blei oder aus einem ähnlichen, ein höheres spezifisches Gewicht aufweisenden Material sein.

Nach einer Weiterbildung der Erfindung weist die Vorrichtung eine die Pendelbewegungen der Behälteraufnahme dämpfende Dämpfungseinrichtung unterhalb der Vertiefung angeordnet auf, und weist die Dämpfungseinrichtung eine Wanne auf, in der eine viskose Flüssigkeit eingefüllt ist, in die das Gewicht der Behälteraufnahme eintaucht. Die viskose Flüssigkeit bremst die Behälteraufnahme bei jeder Pendelschwingung, so daß die Pendelbewegungen der Behälteraufnahme relativ schnell abklingen und sich die Behälteraufnahme in ihre Ruhestellung begibt, in der ein auf ihr abgestellter Getränkebehälter lotrecht ausgerichtet ist.

Die Dämpfung der Dämpfungseinrichtung kann nach einer Weiterbildung in vorteilhafter Weise dadurch variiert werden, daß das Gewicht mittels eines Bolzens an der Behälteraufnahme befestigt ist und daß der Bolzen an einem Ende ein Gewinde aufweist, mittels dessen der Bolzen veränderbar tief in der Behälteraufnahme gehalten ist. Durch Variation der Länge des aus der Behälteraufnahme vorragenden Abschnittes des Bolzens kann die Eintauchtiefe des Gewichtes in der Flüssigkeit geändert und somit der Grad der Dämpfung geändert werden. Die Behälteraufnahme kann selbst ein Innengewinde aufweisen, der Bolzen kann aber beispielsweise auch mittels einer Mutter an der Behälteraufnahme gehalten sein.

Vorzugsweise weist das Gewicht einen größeren Querschnitt auf, als die Durchbrechung, und ist der Bolzen bis zum Anschlag des Gewichtes an der Unterseite der Durchbrechung in die Behälteraufnahme einbringbar und in dieser Stellung arretierbar. Diese Stellung des Bolzens kann mit Vorteil als Transportstellung für die Vorrichtung für die Zeit dienen, während der die Vorrichtung nicht im Einsatz ist, weil das Gewicht in dieser Stellung die Durchbrechung verschließt und so ein Auslaufen der Flüssigkeit der Dämpfungseinrichtung verhindert.

Damit der schwingfähig auf einer Stellfläche einer im Fahrzeug anordbaren Halterung aufgestellte Ständer nicht zusätzlich Kippbewegungen ausführt, die zum Umkippen des abgestellten Getränkebehälters führen könnten, ist an dem an der Standfläche befindlichen, in die Halterung vorstehenden Zapfen eine radial vorstehende, die Öffnungsränder der Durchbrechung der Stellfläche untergreifende Stützplatte angeordnet.

Die Federelemente selbst sorgen bereits für eine Dämpfung der Schwingung des Ständers, die noch durch eine viskose Flüssigkeit verstärkt werden kann, die in der Halterung eingefüllt ist und in die der Zapfen mit seinem unteren freien Ende eintaucht.

Ein Ausführungsbeispiel ist in der Zeichnung dargestellt. Es zeigen:

Fig. 1    eine Schnittansicht der Vorrichtung mit der zusätzlichen Halterung in Ruhestellung und

Fig. 2    die Schnittansicht der Vorrichtung in ausgelenkter Stellung.

Die Vorrichtung hat einen Ständer 1, der an seiner Oberseite eine Führung 25 aufweist, die eine als Kugelschale ausgebildete Vertiefung umfaßt, in die eine Behälteraufnahme 2 so eingesetzt ist, daß die Behälteraufnahme 2 und der Ständer 1 kugelgelenkartig ineinandergreifen. Die Behälteraufnahme 2 ist um den Krümmungsmittelpunkt 3 der Kugelschale pendelnd in der Kugelschale beweglich. An ihrer an der Kugelschale abgewandten Oberseite weist die Behälteraufnahme einen tellerförmig ausgebildeten Abstellplatz 4 zum Abstellen eines Getränkebehälters auf. Zwischen der Wandung 5 der Kugelschale und der Behälteraufnahme 2 sind Rollemente 6 angeordnet, die ein möglichst reibungswiderstandsarmes Bewegen der Behälteraufnahme in der Kugelschale ermöglichen.

Die Wandung 5 der Kugelschale weist in ihrem unteren Bereich eine Durchbrechung 7 auf, durch die ein im unteren Bereich der Behälteraufnahme 2 angeordnetes Gewicht 8 nach unten in den Ständer hineinragt. Das Gewicht 8 ist mittels eines Bolzens 9 befestigt, der in den Endschwenkstellungen der Behälteraufnahme 2 an dem Öffnungsrand der Durchbrechung 7 anschlägt, wobei in den Endschwenkstellungen die Behälteraufnahme 2 durch das Gewicht 8, das die Wandung 5 der Kugelschale untergreift, gegen ein Herausrutschen aus der Kugelschale gesperrt ist.

Unterhalb der Behälteraufnahme 2 ist im Ständer 1 eine Dämpfungseinrichtung angeordnet, die eine Wanne 10 umfaßt, in die eine viskose Flüssigkeit 11 eingefüllt ist, in die das Gewicht 8 eintaucht. Der Bolzen 9 weist eine Stellschraube auf, durch die die Eintauchtiefe des Gewichtes 8 veränderbar ist.

Der Ständer 1 weist einen von seiner Standfläche 12 lotrecht nach unten vorragenden Zapfen 14 auf. Der Ständer 1 ist mit seiner Standfläche 12 auf der Stellfläche 15 der Halterung 13 aufgestellt. Die Stellfläche 15 weist eine Durchbrechung 16 auf, durch die der Zapfen 14 des Ständers 1 in die Halterung 13 hineinragt. Zwischen der Stellfläche 15 und der Standfläche 12 sind zur reibungswiderstandsärmeren Beweglichkeit des Ständers 1 Rollelemente 17 angeordnet.

Zwischen den Seitenwänden 18 der Halterung 13 und dem Zapfen 14 des Ständers 1 sind Federelemente 19 in waagerechter Ebene verspannt, so daß der Ständer 1 in waagerechter Ebene schwingfähig in der Halterung 13 angeordnet ist.

An dem Zapfen 14 ist eine radial von dem Zapfen 14 vorstehende Stützplatte 20 angeordnet, die die Öffnungsränder der Durchbrechung 16 untergreift und ein Umkippen des Ständers 1 verhindert. Das untere freie Ende des Zapfens 14 taucht in eine in der Halterung 13 eingefüllte viskose Flüssigkeit 21 ein. Zur Vergrößerung der mit der viskosen Flüssigkeit 21 in Berührung stehenden Fläche des Zapfens 14 weist der Zapfen 14 an seinem freien Ende eine radial von dem Zapfen 14 vorstehende Gleitplatte 22 auf.

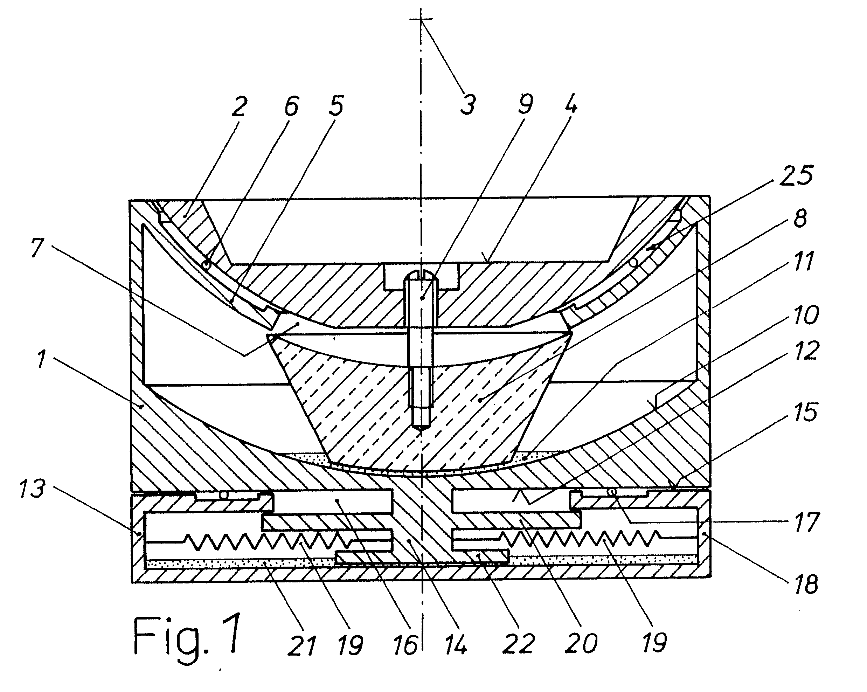

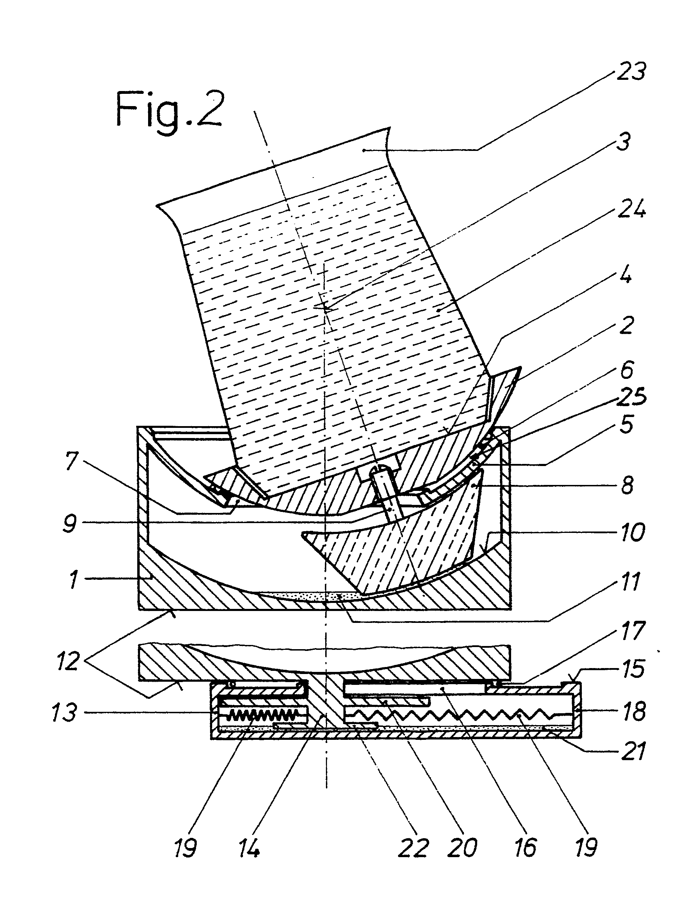

Fig. 2 zeigt eine Darstellung der Vorrichtung, bei der sich sowohl der Ständer 1 in der Halterung 13, als auch die Behälteraufnahme 2 im Ständer 1 in ausgelenkter Stellung befinden. Gleiche Bauelemente sind mit den gleichen Bezugsziffern bezeichnet wie in Fig. 1.

Zur Veranschaulichung der Funktionsweise der Vorrichtung ist in Fig. 2 ein auf der Behälteraufnahme 2 abgestellter offener Getränkebehälter 23, hier ein Trinkglas, gezeichnet, das eine Flüssigkeit 24 beinhaltet.

**Patentansprüche**

1.   Vorrichtung zum Abstellen von Getränkebehältern (23), insbesondere von offenen Trinkgefäßen, in Fahrzeugen, mit einem in dem Fahrzeug anordbaren Ständer (1), an dem eine Behälteraufnahme (2) pendelfähig gelagert ist, dadurch gekennzeichnet,

    daß der Ständer (1) eine die Behälteraufnahme (2) bei ihren Pendelbewegungen führende Führung (25) aufweist, die eine an der Oberseite des Ständers (1) angeordnete Vertiefung umfaßt, in die die Behälteraufnahme (2) formschlüssig eingesetzt ist, daß der Ständer (1) eine ebene Standfläche (12) aufweist, mit der er auf einer Stellfläche (15) einer im Fahrzeug anordbaren Halterung (13) in waagerechter Ebene schwingfähig aufgestellt ist, daß an der Standfläche (12) ein Zapfen (14) angeordnet ist, der lotrecht nach unten durch eine Durchbrechung (16) der Stellfläche (15) in die Halterung (13) hinein vorsteht und daß zwischen dem Zapfen (14) und den Seitenwänden (18) der Halterung (13) in waagerechter Ebene Federelemente (19) verspannt sind.

2. Vorrichtung nach Anspruch 1, dadurch gekennzeichnet, daß die Vertiefung eine Kugelschale ist, daß die Behälteraufnahme (2) und der Ständer (l) kugelgelenkartig ineinandergreifen, daß die Behälteraufnahme (2) an ihrer der Kugelschale abgewandten Seite einen Abstellplatz (4) für den Getränkebehälter (23) aufweist und daß der Krümmungsmittelpunkt (3) der Kugelschale oberhalb der Behälteraufnahme (2) liegt.

3. Vorrichtung nach einem der Ansprüche 1 oder 2, dadurch gekennzeichnet, daß zwischen der Wandung (5) der Vertiefung und der Behälteraufnahme (2) Rollelemente (6) angeordnet sind.

4. Vorrichtung nach einem der Ansprüche 1 bis 3, dadurch gekennzeichnet, daß die Behälteraufnahme (2) in ihrem unteren Bereich ein Gewicht (8) aufweist.

5. Vorrichtung nach Anspruch 4, dadurch gekennzeichnet, daß die Wandung (5) der Vertiefung in ihrem unteren Bereich eine Durchbrechung (7) aufweist, durch die das Gewicht (8) nach unten in den Ständer (1) hineinragt.

6. Vorrichtung nach einem der vorhergehenden Ansprüche, dadurch gekennzeichnet, daß sie eine die Pendelbewegungen der Behälteraufnahme (2) dämpfende Dämpfungseinrichtung aufweist.

7. Vorrichtung nach Anspruch 6 und einem der Ansprüche 4 oder 5, dadurch gekennzeichnet, daß die Dämpfungseinrichtung unterhalb der Vertiefung angeordnet ist und daß die Dämpfungseinrichtung eine Wanne (10) aufweist, in der eine viskose Flüssigkeit (11) eingefüllt ist, in die das Gewicht (8) der Behälteraufnahme (2) eintaucht.

8. Vorrichtung nach Anspruch 5 und 7, dadurch gekennzeichnet, daß das Gewicht (8) mittels eines Bolzens (9) an der Behälteraufnahme (2) befestigt ist und daß der Bolzen (9) an einem Ende ein Gewinde aufweist, mittels dessen der Bolzen (9) veränder-bar tief in der Behälteraufnahme (2) gehalten ist.

9. Vorrichtung nach Anspruch 8, dadurch gekennzeichnet, daß das Gewicht (8) einen größeren Querschnitt aufweist als die Durchbrechung (7) und daß der Bolzen (9) bis zum Anschlag des Gewichtes (8) an der Unterseite der Durchbrechung (7) in die Behälteraufnahme (2) einbringbar und in dieser Stellung arretierbar ist.

10. Vorrichtung nach Anspruch 1, dadurch gekennzeichnet, daß an dem Zapfen (14) eine radial vorstehende, die Öffnungsränder der Durchbrechung (16) untergreifende Stützplatte (20) angeordnet ist.

11. Vorrichtung nach einem der Ansprüche 1 oder 10, dadurch gekennzeichnet, daß in der Halterung (13) eine viskose Flüssigkeit (21) eingefüllt ist, in die der Zapfen (14) mit seinem unteren freien Ende eintaucht.

**Claims**

1. Apparatus for depositing beverage containers (23), especially open drinking vessels, in vehicles, with a pedestal (1) on which a container receptacle (2) is oscillatingly carried, characterized in that the pedestal (1) has a guide (25) for guiding the container receptacle (2) during its oscillating movements, comprising a recess arranged on top of the pedestal (1) and positively inserted into the container receptacle (2), the pedestal (1) having a level standing surface (12) by which it is placed upon the positioning surface (15) of a retainer (13) arrangeable oscillatingly in a horizontal plane, that on the standing surface (12) there is arranged a trunnion (14) protruding vertically downward through an opening (16) of the positioning surface (15) into the retainer (13), and that spring means (19) are braced in a horizontal plane between the trunnion (14) and the lateral walls (18) of the retainer (13).

2. Apparatus according to claim 1, characterized in that the recess is a ball socket, that the container receptacle (2) and the pedestal (1) mesh with each other in a ball-and-socket joint fashion, that the container receptacle (2) on its end facing away from the ball socket exhibits a depositing surface (4) for the beverage container (23), and that the ball socket's curvature center (3) is located above the container receptacle (2).

3. Apparatus according to one of the claims 1 or 2, characterized in that roller means (6) are arranged between the wall (5) of the recess and the container receptacle (2).

4. Apparatus according to one of the claims 1 through 3, characterized in that the container receptacle (2) has a weight (8) in its lower reach.

5. Apparatus according to claim 4, characterized in that the wall (4) of the recess in its lower reach has a hole through which the weight (8) extends downward into the pedestal (1).

6. Apparatus according to one of the preceding claims, characterized in that it has a dampening device for absorbing the oscillating movements of the container receptacle (2).

7. Apparatus according to claim 6 and one of the claims 4 or 5, characterized in that the dampening device is arranged below the recess and that it exhibits a trough (10) filled by a viscous liquid (11) into which the weight (8) of the container receptacle (2) immerses.

8. Apparatus according to claims 5 and 7, characterized in that the weight (8) is fastened to the container receptacle (2) by a pin (9) and that the pin (9) has on one end a thread by means of which it is held within the container receptacle (2) at a variable depth.

9. Apparatus according to claim 8, characterized in that the weight (8) has a larger cross section than the hole (7) and that the pin (9) is penetrable into the container receptacle (2) up to the weight's (8) stop at the bottom of the hole (7) and lockable in that position.

10. Apparatus according to claim 1, characterized in that on the trunnion (14) there is arranged a radially projecting supporting plate (20) extending under the opening rims of the hole (16).

11. Apparatus according to one of the claims 1 or 10, characterized in that the retainer (13) is filled by a viscous liquid (21) into which the trunnion (14) immerses with its lower free end.

**Revendications**

1. Dispositif destiné au rangement de récipients à boisson (23), notamment de récipients à boire ouverts, dans des véhicules, comportant un support (1) à placer dans le véhicule sur lequel est monté oscillant un porte-récipient (2), caractérisé en ce que le support (1) comporte un organe de guidage (25) guidant le porte-récipient (2) lors de ses oscillations, qui comporte une partie creuse placée sur la face supérieure du support (1), dans laquelle le porte-récipient (2) est inséré par concordance de forme, en ce que le support (1) présente une surface d'appui (12) plane par laquelle il est placé oscillant sur une surface de positionnement (15) d'une fixation (13) à placer dans le véhicule, en ce que sur la surface d'appui (12) est placé un tenon (14) qui dépasse perpendiculairement vers le bas, à travers un ajour (16) de la surface de positionnement (15), à l'intérieur de la fixation (13) et en ce que des éléments à ressort (19) sont tendus dans un plan horizontal, entre le tenon (14) et les parois latérales (18) de la fixation (13).

2. Dispositif selon la revendication 1, caractérisé en ce que la partie creuse est une coque sphérique, en ce que le porte-récipient (2) et le support (1) s'engagent l'un dans l'autre à la manière d'articulations sphériques, en ce que le porte-récipient (2) présente une place de rangement (4) pour le récipient à boisson (23), sur son côté éloigné de la coque sphérique et en ce que le centre de courbure (3) de la coque sphérique se situe au-dessus du porte-récipient (2).

3. Dispositif selon l'une des revendications 1 ou 2, caractérisé en ce que des éléments à rouleaux (6) sont placés entre la paroi (5) de la partie creuse et le porte-récipient (2).

4. Dispositif selon l'une des revendications 1 à 3, caractérisé en ce que le porte-récipient (2) comporte un poids (8) dans sa région inférieure.

5. Dispositif selon la revendication 4, caractérisé en ce que la paroi (5) de la partie creuse présente dans sa région inférieure, un ajour (7) à travers lequel le poids (8) pénètre vers le bas dans le support (1).

6. Dispositif selon l'une des revendications précédentes, caractérisé en ce qu'il comporte un dispositif d'amortissement, amortissant les oscillations du porte-récipient (2).

7. Dispositif selon la revendication 6 et l'une des revendications 4 ou 5, caractérisé en ce que le dispositif d'amortissement est placé sous la partie creuse et en ce que le dispositif d'amortissement comporte un bac (10), rempli d'un liquide visqueux (11), dans lequel s'immerge le poids (8) du porte-récipient (2).

8. Dispositif selon les revendications 5 et 7, caractérisé en ce que le poids (8) est fixé au moyen d'un bouton (9) sur le porte-récipient (2) et en ce que le bouton (9) présente, à une extrémité, un filetage par lequel il est maintenu dans le porte-récipient (2), à une profondeur variable.

9. Dispositif selon la revendication 8, caractérisé en ce que le poids (8) présente une section transversale plus grande que l'ajour (7) et en ce que le boulon (9) peut être introduit dans le porte-récipient (2) jusqu'à ce que le poids (8) vienne buter contre la face inférieure de l'ajour (7), et peut être bloqué dans cette position.

10. Dispositif selon la revendication 1, caractérisé en ce qu'une plaque d'appui (20), faisant saillie radialement, passant sous les bords d'ouverture de l'ajour (16), est placée sur le tenon (14).

11. Dispositif selon l'une des revendications 1 ou 10, caractérisé en ce que la fixation (13) est remplie d'un liquide visqueux (21) dans lequel s'immerge l'extrémité libre inférieure du tenon (14).

Fig. 1

Fig.2